# EUROPEAN PATENT APPLICATION

(11) **EP 3 929 857 A1**
(43) Date of publication of application: **29.12.2021**
(21) Application number: 19916457.5
(22) Date of filing: 20.02.2019
(51) Int. Cl.: G06Q 40/06

(54) **INFORMATION PROCESSING DEVICE, INFORMATION PROCESSING METHOD, AND RECORDING MEDIUM**

(71) Applicant: Sony Group Corporation, Tokyo 108-0075 (JP)
(72) Inventor: HIROBE, Keisuke, Tokyo 140-0002 (JP)
(74) Representative: D Young & Co LLP
(86) International application number: PCT/JP2019/006415
(87) International publication number: WO 2020/170375

(57) **Abstract**

[Object]

To propose mechanisms for supporting preparation of a more appropriate life plan.

[Solving Means]

An information processing apparatus includes a first prediction unit that performs a future prediction for health assets including physical function and/or cognitive function of a target person, a second prediction unit that performs a future prediction for economic assets of the target person, and a generation unit that, on the basis of prediction results for the health assets and prediction results for the economic assets of the target person, generates information pertaining to options that are capable of being selected by the target person.

## Description

### [Technical Field]

The present disclosure relates to an information processing apparatus, an information processing method, and a recording medium.

### [Background Art]

In recent years, people's lifespans continue to lengthen, and it is said that the average lifespan will exceed 100 years, in other words, that an age in which people will live for 100 years will arrive. In such an age, it is envisioned that the time taken for one's lifespan to end after retiring from one's job will lengthen. Accordingly, if people retire after not building sufficient economic assets (money, land, buildings, securities, and so on), his/her economic assets could be depleted before he/she reach his/her lifespan. It is predicted that such a situation will occur more the further that people's lifespans lengthen. Accordingly, in order to avoid such a situation, there is a need to prepare an appropriate life plan which takes into account that there is more time after retirement until one's lifespan is reached.

The life plan is prepared by, on the basis of vision of the future that each individual treats as ideal, considering means for predicting and procuring an amount of funds that is likely necessary in the future, and considering means for predicting health risks such as illness or injury that could occur in the future and avoiding economic risks due to these health risks. The purchase of financial products such as stocks or insurance is given as an example of means for avoiding economic risk. Because a life plan differs for each individual, the financial products to be bought can differ for each person. As an example of a technique for selecting appropriate financial products for each individual, for example, the following PTL 1 discloses a technique that pertains to automobile insurance and calculates insurance risk that reflects driving characteristics.

### [Citation List]

### [Patent Literature]

[PTL 1]
JP 2015-225498A

### [Summary]

### [Technical Problem]

The health of a person is known to be impaired as the person ages. The more that one's health is impaired, the greater the economic risk, such as employment becoming difficult and salary income decreasing, or unexpected outflow of economic assets occurring due to illness, injury, or the like. However, with the mechanism disclosed in the abovementioned PTL 1, insurance risk is merely calculated on the basis of current driving characteristics of a target person. No consideration is given whatsoever in regard to the current health of the target person or that their health could be impaired in the future.

Accordingly, the present disclosure proposes mechanisms for supporting preparation of a more appropriate life plan.

### [Solution to Problem]

According to the present disclosure, an information processing apparatus including a first prediction unit that performs a future prediction for health assets including physical function and/or cognitive function of a target person, a second prediction unit that performs a future prediction for economic assets of the target person, and a generation unit that, on the basis of prediction results for the health assets and prediction results for the economic assets of the target person, generates information pertaining to options that are capable of being selected by the target person is provided.

In addition, according to the present disclosure, an information processing method including performing a future prediction for health assets including physical function and/or cognitive function of a target person, performing a future prediction for economic assets of the target person, and generating, by a processor and on the basis of prediction results for the health assets and prediction results for the economic assets of the target person, information pertaining to options that are capable of being selected by the target person is provided.

In addition, according to the present disclosure, a recording medium on which a program is recorded, the program for causing a computer to function as a first prediction unit that performs a future prediction for health assets including physical function and/or cognitive function of a target person, a second prediction unit that performs a future prediction for economic assets of the target person, and a generation unit that, on the basis of prediction results for the health assets and prediction results for the economic assets of the target person, generates information pertaining to options that are capable of being selected by the target person is provided.

### [Brief Description of Drawings]

[FIG. 1]

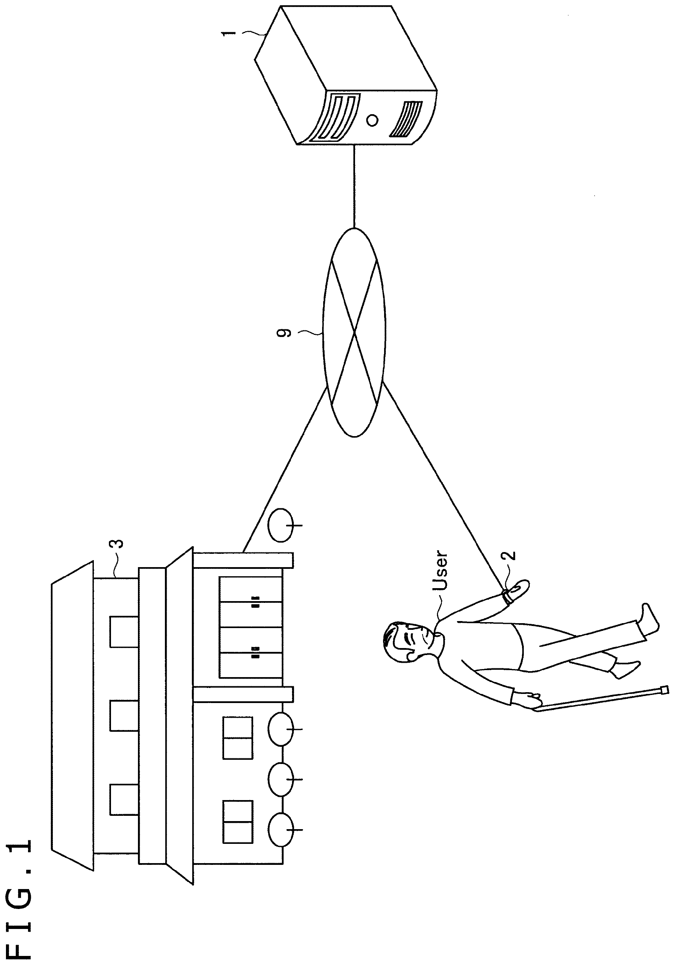

   FIG. 1 is a view for describing an outline of an information processing system according to one embodiment of the present disclosure.
[FIG. 2]

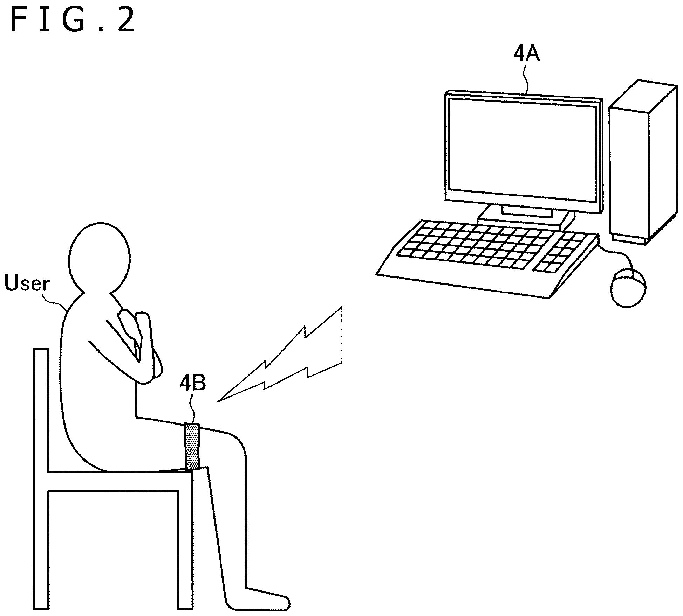

   FIG. 2 is a view for describing an example of a method of measuring physical fitness/cognitive function information, according to the present embodiment.
[FIG. 3]

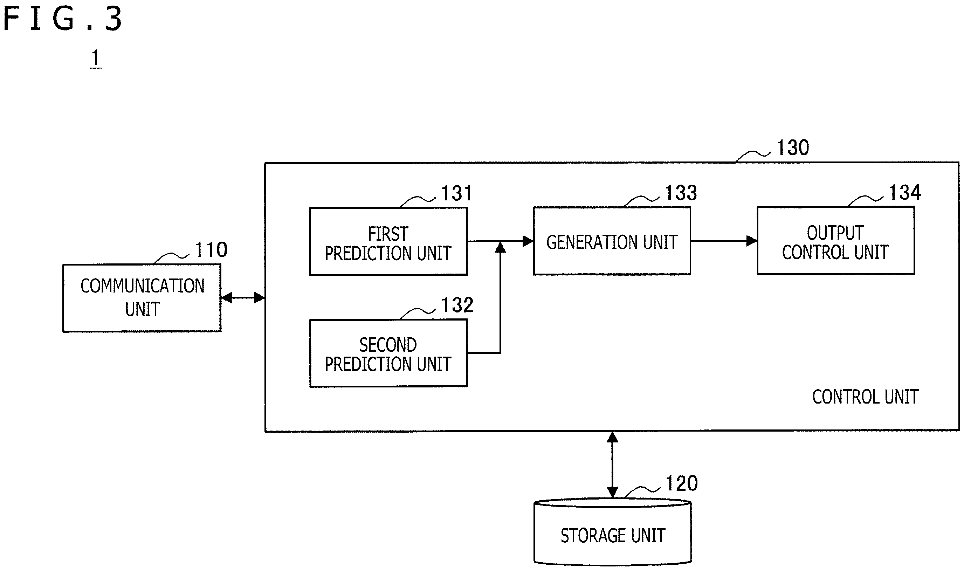

   FIG. 3 is a block view that illustrates an example of a logical configuration of a server according to the present embodiment.
[FIG. 4]

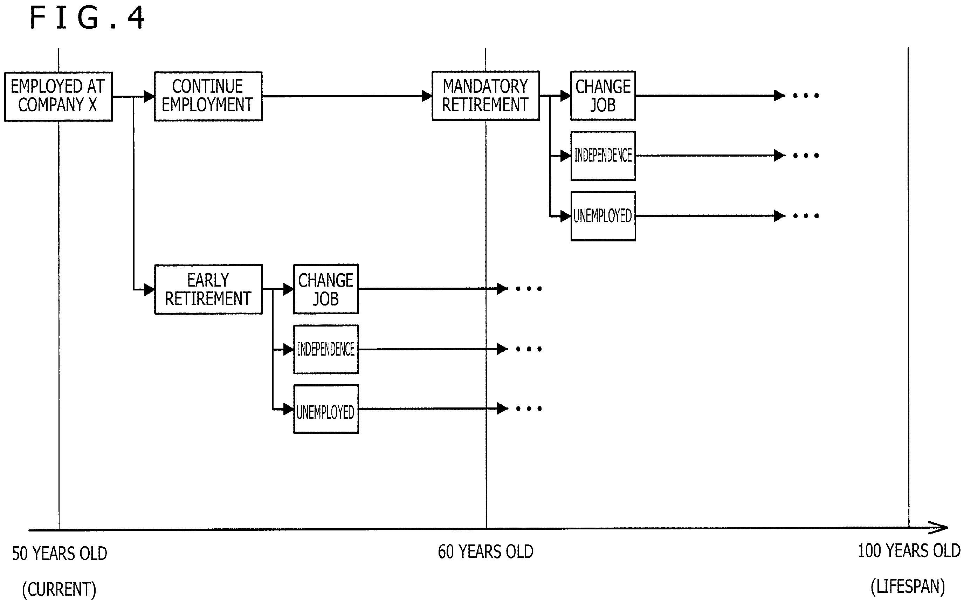

   FIG. 4 is a view that illustrates an example of work options that a user can take.
[FIG. 5]

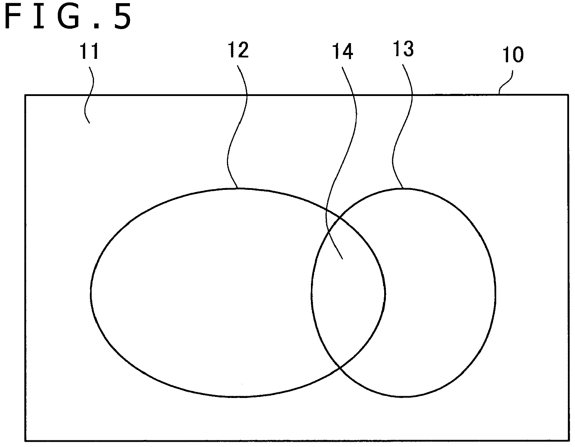

   FIG. 5 is a Venn diagram for describing an example of classifications for a health state of a person.
[FIG. 6]

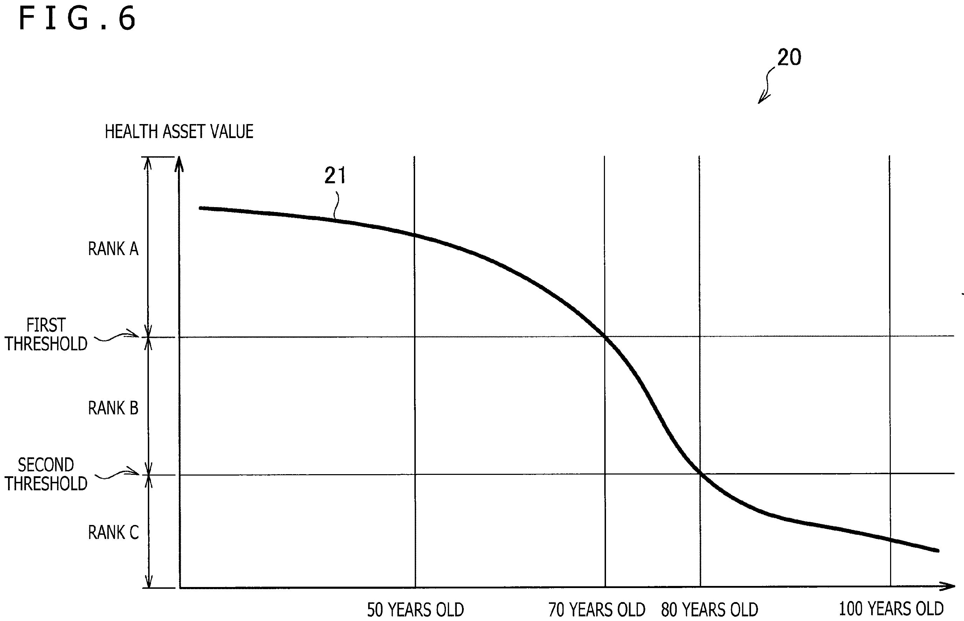

   FIG. 6 is a graph that illustrates an example of a future prediction for health assets, according to the present embodiment.
[FIG. 7]

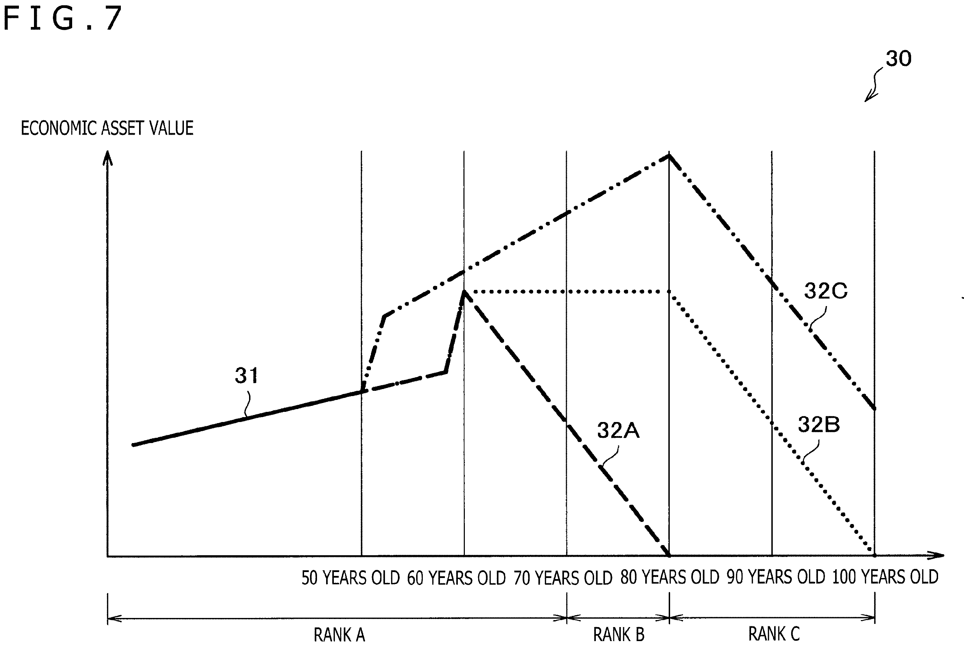

   FIG. 7 is a graph for describing an example of a future prediction for economic assets, according to the present embodiment.
[FIG. 8]

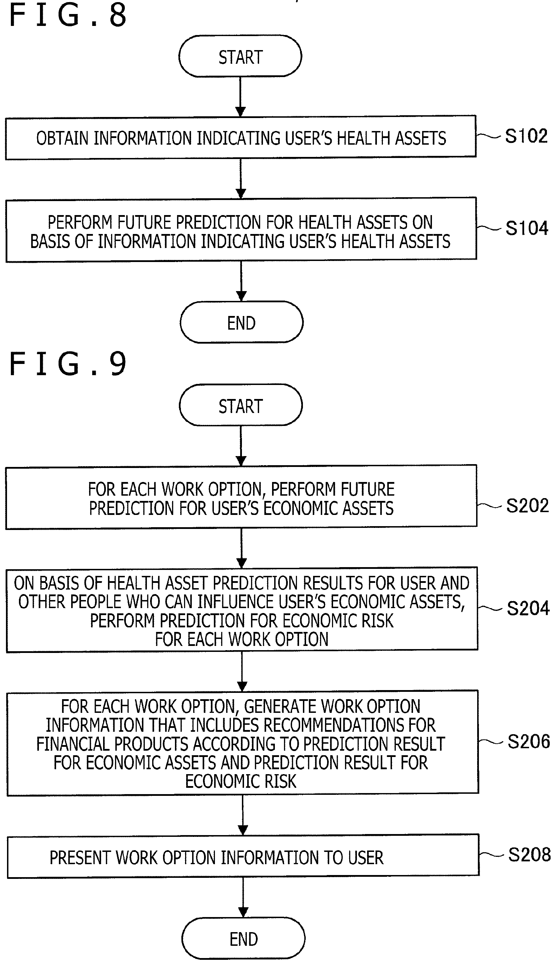

   FIG. 8 is a flow chart that illustrates an example of a flow for health asset future prediction processing that is executed in a server according to the present embodiment.
[FIG. 9]
   FIG. 9 is a flow chart that illustrates an example of a flow of work option information presentation processing that is executed in a server according to the present embodiment.
[FIG. 10]

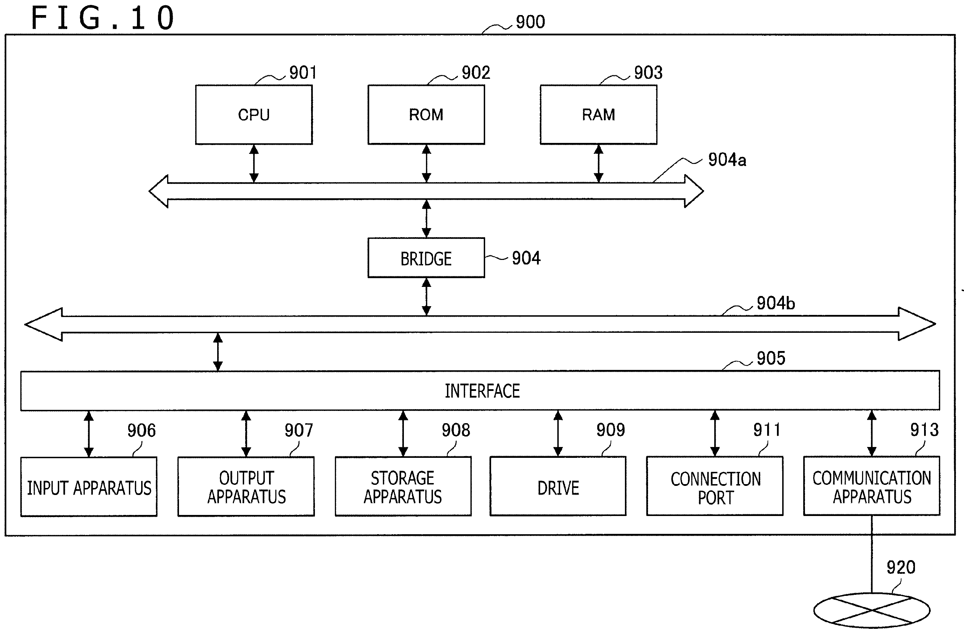

   FIG. 10 is a block view that illustrates an example of a hardware configuration of an information processing apparatus according to the present embodiment.

### [Description of Embodiments]

While referring to the attached drawings, description is given in detail below regarding a desirable embodiment of the present disclosure. Note that, in the present specification and drawings, the same reference sign is applied to components having substantially the same functional configuration, and thereby duplicate description is omitted.

Note that the description is made in the following order.
1. Outline of proposed technology
2. Configuration example
3. Technical features
   3.1. User settings
   3.2. Future predictions for health assets
   3.3. Future predictions for economic assets
   3.4. Presentation of work option information
   3.5. Processing flow
4. Variation
5. Hardware configuration example
6. Supplement

<<1. Outline of proposed technology>>

FIG. 1 is a view for describing an outline of an information processing system according to one embodiment of the present disclosure. As illustrated in FIG. 1, an information processing system according to the present embodiment includes a server 1, a user terminal 2, and a measurement facility 3 (in other words, a measurement apparatus that is described below). The server 1, the user terminal 2, and the measurement facility 3 are connected via a network 9. A measurement apparatus for measuring physical fitness/cognitive function information is disposed at the measurement facility 3.

### (1) Measurement apparatus

The measurement apparatus disposed at the measurement facility 3 is an information processing apparatus for measuring physical fitness/cognitive function information of a user (the target person for whom the life plan is prepared). Physical fitness/cognitive function information is information that indicates physical fitness and cognitive function, and includes information that indicates physical function and information indicating cognitive function. Physical function includes muscle strength, endurance, agility, lower limb coordination, and reaction speed. Cognitive function is memory, attention, judgment, and comprehension. Physical fitness/cognitive function information is a set of discrete values or continuous values that indicate the height of each function such as muscle strength. Measurement of physical fitness/cognitive function information is described with reference to FIG. 2.

FIG. 2 is a view for describing an example of a method of measuring physical fitness/cognitive function information, according to the present embodiment. A measurement apparatus 4 according to the present embodiment includes a sensor information processing terminal 4A and a sensor device 4B. The sensor information processing terminal 4A measures physical fitness/cognitive function information by processing sensor information detected by the sensor device 4B. The sensor information processing terminal 4A is realized as any information processing apparatus such as a PC, a laptop PC, a tablet terminal, or a smartphone, for example. The sensor device 4B detects information that indicates a user state or a user action. The sensor device 4B includes, for example, an acceleration sensor, a gyro sensor, a biological information sensor, and the like. The sensor device 4B is realized as a wearable device, for example. In the example illustrated in FIG. 2, the sensor device 4B is mounted to a user's leg. The sensor information processing terminal 4A and the sensor device 4B are connected via any communication channel, such as Bluetooth (registered trademark) or Wi-Fi (registered trademark), for example. The sensor information processing terminal 4A and the sensor device 4B may be separated as in the example illustrated in FIG. 2, or may be formed as one apparatus.

The sensor information processing terminal 4A displays or outputs audio for a predetermined action instruction for the measurement of physical fitness/cognitive function information. Responding to this action instruction, the user repeatedly raises and lowers their legs while seated in a chair or repeatedly stands up and sits down, for example. These actions are detected by the sensor device 4B mounted to a leg or the like of the user as illustrated in FIG. 2, and sensor information indicating a detection result is transmitted to the sensor information processing terminal 4A. The sensor information processing terminal 4A analyzes the sensor information received from the sensor device 4B, measures (for example, numerically expresses) physical fitness/cognitive function information, and records the physical fitness/cognitive function information. In addition, the sensor information processing terminal 4A may display a screen for measuring physical fitness/cognitive function information, and measure physical fitness/cognitive function information on the basis of input by the user with respect to the screen. The sensor information processing terminal 4A also transmits measured cognitive function information to the server 1.

Description is given for an example of a method of measuring each item of physical fitness/cognitive function information. "Muscle strength" can be expressed numerically by measuring the amount of time that exercise for standing up from and sitting down on a chair and leg-raising while seated is continued. "Agility" can be expressed numerically by measuring the number of steps made while seated. "Coordination" can be expressed numerically by measuring the accuracy at which a leg is moved in a triangle shape in alignment with a tempo, while seated. "Reaction speed" can be expressed numerically by measuring the speed at which a leg is moved in reaction to an instruction being displayed on a screen, while seated. "Endurance" can be expressed numerically by measuring an amount of time during which vocalization continues while seated, and a decrease in speed during the time of the exercise for standing up from and sitting down on a chair. In addition, "memory" can be expressed numerically by how many items displayed on a screen can be memorized. "Attention" can be expressed numerically by how fast a button can be accurately pressed in accordance with an instruction on a screen.

### (2) User terminal

The user terminal 2 is an information processing apparatus mounted to the user or possessed by the user. The user terminal can be realized as a tablet terminal, a smartphone, or a wearable device. The user terminal 2 includes, for example, various sensors such as a biosensor, a position measurement unit (inside/outside positioning), an acceleration sensor, and a gyro sensor, a communication unit that enables communication using any communication standard, an input unit such as a touch panel, and an output unit such as a display.

The user terminal 2 measures (or obtains) information indicating the status of daily life, such as meal content, calorie intake, calories burned, number of steps, distance moved, exercise intensity and time, heart rate, and amount of sleep. In other words, the information indicating the status of daily life includes information indicating all aspects of the user's everyday life in addition to what is called activity amount information. The status of daily life may include activity such as the number of steps, an amount of exercise time, an amount of sleep, and meals. The user terminal 2 may accept from the user the input of information indicating the status of daily life. The user terminal 2 transmits to the server 1 the measured or inputted information indicating the status of daily life.

On the basis of information received from the server 1, the user terminal 2 displays or outputs audio for a predetermined training instruction in order to improve the user's physical fitness and cognitive function. The user can plan to improve their physical fitness and cognitive function by performing training on the basis of this training instruction. A situation in which the user performs the training is detected by the user terminal 2 and transmitted to the server 1. Note that, in FIG. 1, the user terminal 2 is directly connected to the network 9, but the user terminal 2 may be connected to the network 9 via the measurement facility 3.

### (3) Server

The server 1 is an information processing apparatus that performs processing for assisting the preparation of the user's life plan. For example, the server 1 predicts future health assets or economic assets for the user, and provides the user with information based on prediction results. Note that health assets are assets provided to a person for leading a healthy life. In addition, economic assets are what are called assets such as money, land, buildings, and securities.

As an example, the server 1 provides information pertaining to the building of economic assets. For example, the server 1 provides prediction results for future economic assets for the user, and recommends actions in order to retain economic assets that are sufficient to reach one's lifespan. By preparing a life plan with reference to such information, the user can build sufficient economic assets and lead their life to the end of their lifespan without economic inconvenience.

As another example, the server 1 provides information pertaining to the building of health assets. For example, the server 1 provides prediction results for future health assets for the user, and recommends actions in order to suppress (delay) the future decrease in health assets. When the user performs actions according to the recommendations, the future decrease in health assets will be suppressed, and thus the user can lead a healthy life for a longer period of time. Further, because economic risk due to a decrease in health assets also decreases, it is possible to build better economic assets.

Note that the functionality of the server 1 described above may be held divided among a plurality of servers and provided by the plurality of servers cooperating. For example, the functionality of the server 1 described above may be provided according to cooperation between a server that predicts health assets, a server that provides information pertaining to the building of economic assets, and a server 1 that provides information pertaining to the building of health assets. The plurality of servers may each be managed by a different business operator. In addition, the plurality of servers, the user terminal 2, and the measurement facility 3 may each be managed by a different business operator. Needless to say, at least some of these may be managed by the same business operator.

### <<2. Configuration example>>

FIG. 3 is a block view that illustrates an example of a logical configuration of the server 1 according to the present embodiment. As illustrated in FIG. 3, the server 1 includes a communication unit 110, a storage unit 120, and a control unit 130.

### (1) Communication unit 110

The communication unit 110 transmits and receives information to and from another apparatus by wire or wirelessly. The communication unit 110 is connected to Bluetooth, Wi-Fi, a LAN (Local Area Network), a telephone line, or the like, and communicates with the user terminal 2 and the measurement apparatus 4 via the network 9.

### (2) Storage unit 120

The storage unit 120 temporarily or permanently stores a program for operation of the server 1 and various pieces of data. The storage unit 120 stores attribute information for a user, information indicating the user's health assets, and information indicating the user's economic assets.

### (3) Control unit 130

The control unit 130 provides various functions of the server 1. For example, the control unit 130 includes a first prediction unit 131, a second prediction unit 132, a generation unit 133, and an output control unit 134.

The first prediction unit 131 has a function for performing a future prediction for health assets. The second prediction unit 132 has a function for performing a future prediction for economic assets. The generation unit 133 has a function for, on the basis of prediction results for health assets and prediction results for economic assets, generating information that is to be provided to the user. The output control unit 134 has a function for controlling processing for outputting, to the user, information generated by the generation unit 133. Operation of each of these components is described in detail below.

### <<3. Technical features>>

### <3.1. User settings>

Description is given below for a fictitious user that is set in order to describe technical features of the proposed technology. It is assumed that user for which a life plan is to be planned is currently 50 years old, has lifespan of 100 years, and works for company X. The user can select various options for the present and for the future.

Options here are options in the life plan and are specifically options for jobs that the user could engage in. These options are also referred to below as work options. An example of a work option is continuing one's current job. Continuing the job that one is currently engaged in enables the forecasting of a stable income in comparison to changing jobs or going independent. Another example of a work option is switching to another job. Switching to another job includes changing jobs and going independent. Switching to another job is more unstable than continuing one's current job, but can allow for a forecast for income higher than one's current job. Additionally, a work option may include simply retiring (switching to unemployment).

With reference to FIG. 4, description is given below for an example of options that the abovementioned user can take.

FIG. 4 is a view that illustrates an example of work options that the user can take. Continuing to work or early retirement may be given as work options that can be taken at the age of 50. It is envisioned that the work option of continuing to work will be selected in a case where health risks are high and economic risks are low.
In contrast, it is envisioned that the work option of early retirement is selected in a case where the health risk is low and the economic risk is high.

Changing jobs after mandatory retirement at the age of 60, going independent, and becoming unemployed may be given as work options that can be taken in a case of continuing to work at the age of 50. Changing jobs, going independent, and becoming unemployed may be given as work options that can be taken in a case of early retirement at the age of 50. It is envisioned that the work option for changing jobs will be selected in a case where the health risk is high, the work option for going independent will be selected in the case where the health risk is low, and the work option for being unemployed will be taken in a case where the health risk is approximately medium. In addition, it can be considered that changing jobs or going independent after early retirement have high expected values for money, time, and sense of satisfaction, whereas it can be considered that changing jobs or going independent after mandatory retirement have low expected values for money, time, and sense of satisfaction.

### <3.2. Future predictions for health assets>

The first prediction unit 131 has a function for performing a future prediction for the user's health assets.

Health assets are assets provided to a person for leading a healthy life. For example, "health asset" is a concept that includes physical function and/or cognitive function. Further, "health asset" is a concept that includes a health state such as the state of blood and organs. Health assets may be captured as health risks. "Health risk" includes the risk that long-term care will be necessary, and/or the risk of being affected by an illness. In addition, health assets may be captured as the age at which it is predicted that long-term care will be necessary, or the time until the age at which it is predicted that long-term care will be necessary. In addition, health assets may be captured as the risk that physical function and/or cognitive function is impaired. With reference to FIG. 5, description is given in detail regarding the concept of health assets.

FIG. 5 is a Venn diagram for describing an example of classifications for the health state of a person. The health state of a person can be roughly divided into three states: a healthy state 11, a needs long-term-care state 12, and an ill state 13, for example. The healthy state 11 is a state from among the entirety 10 of the Venn diagram that is not the needs long-term-care state 12 or the ill state 13. The needs long-term-care state 12 is a state where the person requires long-term care by another person to live their life. In the needs long-term-care state 12, work is difficult. The ill state 13 is a state in which the person is affected by an illness. The "illness" here is at a level where daily life is possible, such as diabetes or a kidney disease. A needs-long-term-care/ill state 14, in which the needs long-term-care state 12 and the ill state 13 overlap, is a state in which the person is affected by an illness and requires long-term care by another person to live their life. The needs-long-term-care/ill state 14 is a state in which the person has shifted from being ill to needing long-term care, for example. Work is difficult in the needs-long-term-care/ill state 14, but work is possible in the ill state 13 that is not the needs-long-term-care/ill state 14. Decreases in physical function and/or cognitive function from out of health assets increases the risk of entering the needs long-term-care state 12. From among health assets, a decrease in the health state increases the risk of entering the ill state 13.

The health asset level (in other words, the degree that one is healthy) influences the range of economic activity that can be undertaken. Here, "economic activity" indicates all activity that leads to an increase or decrease in economic assets. High health assets means that the health risk is low, and there is wide range of economic activity that can be undertaken. In contrast, low health assets means that the health risk is high, and there is narrow range of economic activity that can be undertaken. The health asset level is calculated on the basis of the physical fitness/cognitive function information, for example. In addition, the health asset level may be calculated on the basis of the result of a health checkup performed at a medical institution or the like, in addition to the physical fitness/cognitive function information. In addition, the health asset level may be calculated on the basis of information indicating the status of daily life and/or the performance status of training. Note that the information indicating the status of daily life and the performance status of training may be obtained by the user terminal 2, may be obtained by another device, or may be obtained from another server that there is cooperation with. There is no limitation whatsoever on a method of obtaining the information indicating the status of daily life and the performance status of training.

The first prediction unit 131 obtains information indicating the user's health assets and causes the storage unit 120 to store this information. For example, the first prediction unit 131 obtains the user's physical fitness/cognitive function information that is measured by the measurement apparatus 4 and causes the physical fitness/cognitive function information to be stored, or obtains results for the user's health checkup that is performed at the medical institution or the like and causes these results to be stored. The first prediction unit 131 performs a future prediction for health assets on the basis of this information stored in the storage unit 120. In detail, the first prediction unit 131 predicts future time-series change of the health assets, on the basis of past time-series change of the health assets. In this case, for example, on the basis of the information indicating the health assets, the first prediction unit 131 numerically expresses the health assets as a value indicating being healthy the higher the value and not being healthy the lower the value. This value may be referred to below as a health asset value. The first prediction unit 131 predicts future time-series change of the health asset value, on the basis of past time-series change of the health asset value. Machine learning such as a neural network or a support vector machine, for example, can be used in the prediction.

The first prediction unit 131 may predict change of the rank that the user's health assets belong to, out of plural ranks for health assets that are defined in advance. In detail, the first prediction unit 131 predicts the change of the rank by predicting future time-series change for the health asset value, and discretizes the predicted health asset value into one of the plural ranks. For example, health assets can be classified into plural ranks, from a rank for which the degree of health is high to a rank for which the degree of health is low. In particular, the plural ranks for health assets include a rank at which long-term care is necessary. Further, a rank at which long-term care is necessary may include a range for which long-term care is necessary or plural ranks that have different severities, and reference may be made to a national or local government social insurance system or the like for the ranking.

With reference to FIG. 6, description is given in detail regarding a future prediction for health assets by the first prediction unit 131. FIG. 6 is a graph that illustrates an example of a future prediction for health assets, according to the present embodiment. The vertical axis of a graph 20 illustrated in FIG. 6 is a health asset value, and the horizontal axis is age. Note that physical fitness/cognitive function information or health checkup results include a measured value/diagnosed value for each of plural items, but for convenience, health asset value change 21 is illustrated as a one-dimensional value converted from values for plural dimensions. Referring to the health asset value change 21, it is predicted that the health asset value will decrease as age increases. As an example, it is assumed that a rank A, a rank B, and a rank C are defined in this order from a rank with the highest degree of health. An example of the definition of health asset ranks is indicated in Table 1 below. According to the graph 20, the first prediction unit 131 predicts that the rank for the user's health assets will be rank A before the age of 70 which is where the health asset value is greater than or equal to a first threshold, will be rank B after the age of 70 which is where the health asset value becomes less than the first threshold until the age of 80 which is where the health asset value is greater than or equal to a second threshold, and will be rank C after the age of 80 which is where the health asset value becomes less than the second threshold.

### [Table 1]

**Table 1. Example of ranks for health assets**

| Rank | Economic activity that can be undertaken |
|---|---|
| Rank A | Health risk is low; capable of work with high physical/mental load |
| Rank B | Health risk is approximately medium; capable of work with low physical/mental load |
| Rank C | Needs long-term care; work is not possible |

### <3.3. Future predictions for economic assets>

The second prediction unit 132 has a function for performing a future prediction for the user's economic assets.

Economic assets are what are called assets such as money, land, buildings, and securities. A result of numerically expressing the total amount of economic assets that belong to the user is referred to as an economic asset value.

The second prediction unit 132 obtains an economic asset value for the user and causes the storage unit 120 to store this economic asset value. The second prediction unit 132 predicts future time-series change of the economic asset value, on the basis of past time-series change of the economic asset value. Machine learning such as a neural network or a support vector machine, for example, can be used in the prediction.

The second prediction unit 132 has performs a future prediction for the user's economic assets for each work option. This is because future economic assets can be different for each work option. By performing a future prediction for each work option, it is possible to more accurately perform the future prediction for the user's economic assets. With reference to FIG. 7, description is given in detail regarding future prediction for economic assets, for each work option.

FIG. 7 is a graph for describing an example of a future prediction for economic assets, according to the present embodiment. The vertical axis of a graph 30 illustrated in FIG. 7 is an economic asset value, and the horizontal axis is age. The horizontal axis of the graph 30 indicates periods of time that belong to respective ranks in the graph 20 illustrated in FIG. 6. Note that, as described with reference to FIG. 6, because the periods of time which belong to respective ranks are define according to the relation between the health asset value and thresholds, the periods of time that belong to respective ranks can differ for each user. The graph 30 includes a past economic asset value change 31 until the age 50 which is when the prediction is made, and economic asset value change 32A through 32C for each work option thereafter. Referring to the economic asset value change 31, economic assets have gradually accumulated up until the time of the prediction.

The economic asset value change 32A is the change in the economic asset value predicted in the case where a work option A is selected. The work option A is being unemployed after the user has mandatory retirement at the age of 60. The economic asset value greatly increases due to retirement benefits, but because income ceases thereafter, the economic asset value rapidly decreases and becomes 0 at the age of 80. The economic asset value change 32A indicates that, when the work option A is selected, economic assets are depleted at the age of 80 which is before the lifespan of 100 years is reached.

The economic asset value change 32B is the change in the economic asset value predicted in the case where a work option B is selected. The work option B is the user being rehired as a fixed-term employee after mandatory retirement at the age of 60 and continuing to work until the age of 80 at which they become rank C. The economic asset value greatly increases due to the retirement benefits, and the economic asset value does not increase or decrease due to the drop in income. After the age of 80, the economic asset value rapidly drops because the income ceases, and becomes 0 at the age of 100. The economic asset value change 32B indicates that, when the work option B is selected, because the economic assets are not depleted until the age of 100 which is their lifespan, the user can live their life without economic inconvenience until their lifespan is reached.

The economic asset value change 32C is the change in the economic asset value predicted in the case where a work option C is selected. The work option C is where the user has early retirement at the age of 50, changes jobs, and continues to work until they reach rank C. The economic asset value greatly increases due to the retirement benefits, and the economic asset value continues to increase until the age of 80 due to the increase in income after changing jobs. After the age of 80, the economic asset value rapidly decreases because the income ceases, but does not become 0 at the age of 100. The economic asset value change 32C indicates that, when the work option C is selected, because the economic assets are not depleted by the age of 100 which is their lifespan, the user can live their life without economic inconvenience until their lifespan is reached. The economic asset value change 32C also indicates that many economic assets remain at the age of 100 when the work option C is selected, and thus it is possible for these economic assets to be inherited by children or grandchildren, for example.

### <3.4. Presentation of work option information>

On the basis of health asset prediction results and economic asset prediction results for the user, the generation unit 133 generates information pertaining to work options that the user can select. This information is also referred to as work option information below. Work option information includes text, symbols, shapes, and/or graphs, for example.

Work option information may include information that indicates health asset prediction results. For example, the work option information can include a graph that indicates time-series change for the health asset value, as with the graph 20 illustrated in FIG. 6. In addition, the work option information can include prediction results for time-series change of the health asset rank. As a result, the user can select a work option in consideration of future health assets.

The work option information may include information indicating economic asset prediction results for each work option. Economic asset prediction results for each work option are, for each work option, prediction results for the economic asset value at each future age, whether or not economic assets remain before the lifespan is reached, a timing when the economic assets are depleted, and the like, for example. The work option information may include information indicating economic asset prediction results for each of plural work options. For example, the work option information can include a graph that indicates time-series change for the economic asset value for each work option, as with the graph 30 illustrated in FIG. 7. As a result, the user can easily be aware of future economic assets for each work option.

The work option information can include information that recommends actions that the user should perform, for each work option. Investment can be given as an example of this action. Investment here includes, for example, the purchase of and investment in a financial product such as bonds, stock certificates, or insurance, and the purchase and management of a product such as real estate which includes land or a building. By investing, it is possible to increase future economic assets.

As an example, an action that is recommended may be an action for delaying a timing when the balance of the user's economic assets falls below a predetermined threshold. For example, the generation unit 133 generates work option information that includes information that recommends an action for delaying the timing at which the economic asset value falls below a predetermined threshold (for example, 0), that is a timing at which the economic assets are depleted. For example, it is possible to recommend purchase of a financial product such as insurance that has a different accumulation period for each work option, depending on the timing when the economic asset value reaches 0, which differs for each work option. In addition, it is possible to recommend an action for reducing spending, such as moving to a home with cheaper rent or reducing entertainment expenses, in order to ease the rate of the decrease in the economic asset value, which differs for each work option. By the user taking action according to such recommendations, they can delay the timing at which their economic assets are depleted.

As another example, a recommended action may be an action in order to compensate for economic risk. For example, it is possible to recommend purchase of a financial product such as insurance for which an interest rate or rules for early termination differ for each work option, according to the level of economic risk for each work option. By the user taking action according to this recommendation, they can compensate for economic risk. Note that economic risk for each work option is, for example, predicted to be lower in the case of working at a company and higher in a case of working as a business owner.

Here, in a case where health assets decrease, the health risk increases, and the range of economic activity that can be undertaken narrows. Accordingly, the economic risk of one day suddenly having impaired health, finding it difficult to continue one's job, and having lower income can occur. Accordingly, the generation unit 133 may generate work option information on the basis of the influence that a decrease in health assets predicted for the user will have on economic assets. As an example, the work option information can include information indicating an economic risk that can occur due to a decrease in health assets. As another example, an action that is recommended for each work option included in the work option information can differ according to prediction results for the user's health assets. Specifically, it is possible to recommend purchase of a financial product having an operating period according to the prediction results for the user's health assets. For example, it is possible to recommend the purchase of a financial product having a longer operating period the higher the health asset rank at a future timing for the user (for example, at retirement age) or the longer the period of time until the health asset rank decreases to a predetermined rank (for example, rank C), and otherwise recommend the purchase of a financial product having a shorter operating period. In addition, the number of installments for payment that is according to prediction results for the user's health assets may be recommended. As a result, the user can consider selection of a work option and performance of a recommended action on the basis of the influence that a decrease in health assets has on economic assets.

In addition, a decrease in health assets not just for the user but for another person can also influence the user's economic assets. Such another person may be family of the user, including relatives such as the user's parents, siblings, and children, as well as the user's spouse and relatives of the user's spouse, for example. When the health assets of a family member decrease, there can be the economic risk that spending for long-term care of the family member will pile up or income will decrease because it will be difficult for the user to continue their job due to providing long-term care for the family member. Accordingly, the generation unit 133 may generate the work option information on the basis of the influence that a decrease in health assets predicted for another person who can influence the user's economic assets will have on the user's economic assets. As an example, the work option information can include information indicating an economic risk that can occur due to a decrease in health assets for a family member. As another example, an action that is recommended for each work option included in the work option information can differ according to prediction results for the health assets of another person who can influence the user's economic assets. Specifically, it is possible to recommend purchase of a financial product having an operating period according to prediction results for health assets of another person who can influence the user's economic assets. For example, it is possible to recommend the purchase of a financial product having a longer operating period the higher the health asset rank at a future timing for family of the user (for example, at retirement age) or the longer the period of time until the health asset rank decreases to a predetermined rank (for example, rank C), and otherwise recommend the purchase of a financial product having a shorter operating period. In addition, the number of installments for payment that is according to prediction results for family health assets may be recommended. As a result, the user can consider selection of a work option and performance of a recommended action on the basis of the influence that a decrease in health assets for a family member has on economic assets.

In addition, the generation unit 133 may search for workplaces for the user, select a workplace, and generate work option information indicating results of the search or selection.

The output control unit 134 controls output of the work option information generated by the generation unit 133. For example, the output control unit 134 transmits work option information via the communication unit 110 to the user's terminal apparatus, which is a smartphone or the like, to the PC (Personal Computer) of a salesperson who sells financial products, or the like, and causes the work option information to be outputted.

### <3.5. Processing flow>

With reference to FIG. 8 and FIG. 9, description is given below for an example of a processing flow.

### • Health asset future prediction processing

FIG. 8 is a flow chart that illustrates an example of a flow for health asset future prediction processing that is executed in the server 1 according to the present embodiment. As illustrated in FIG. 8, firstly the first prediction unit 131 obtains information indicating the user's health assets (step S102). For example, the first prediction unit 131 obtains the user's physical fitness/cognitive function information that is measured by the measurement apparatus 4. The first prediction unit 131 may also obtain results of a health checkup of the user that is performed at a medical institution or the like. Next, the first prediction unit 131 performs a future prediction for the user's health assets, on the basis of the obtained information indicating the user's health assets (step S104). For example, on the basis of past time-series change for the health asset value which numerically expresses the user's health assets, the first prediction unit 131 predicts future time-series change for the health asset value, and predicts change of the rank of the health assets on the basis of the result of the prediction.

Note that the server 1 can similarly perform the abovementioned health asset future prediction processing for another person who can influence the user's economic assets.

### • Work option information presentation processing

FIG. 9 is a flow chart that illustrates an example of a flow of work option information presentation processing that is executed in the server 1 according to the present embodiment. As illustrated in FIG. 9, firstly the second prediction unit 132 performs a future prediction for the user's economic assets, for each work option (step S202). Next, the generation unit 133 predicts economic risks for each work option, on the basis of health asset prediction results for the user and other people who can influence the user's economic assets (step S204). Next, for each work option, the generation unit 133 generates work option information that includes recommendations for financial products according to the prediction result for economic assets and prediction result for economic risk (step S206). The output control unit 134 transmits the work option information to the user's terminal apparatus or the like, and presents the work option information to the user (step S208).

### <<4. Variation>>

### (1) First variation

The present variation is an example in which action for suppressing a decrease in the user's health assets is recommended.

The generation unit 133 generates information including information that recommends an action for suppressing a decrease of the user's health assets. This action is, for example, training by the user in order to improve physical fitness and cognitive function. For example, on the basis of the user's physical fitness/cognitive function information, the generation unit 133 generates a training menu (training items, intensity, frequency, and so on) for improving physical fitness and cognitive function. The output control unit 134 controls output of the information generated by the generation unit 133. For example, the output control unit 134 transmits the information generated by the generation unit 133 to the user terminal 2 and causes the user terminal 2 to output this information.

### (2) Second variation

The present variation is an example in which the prediction result for health assets is used for another intended use.

As an example, the prediction result for the health assets may be used to recommend an insurance product. For example, on the basis of the prediction result for the health assets, long-term care insurance or life insurance which can address the future decrease in health assets is recommended. In addition, an incentive such as the insurance fee decreasing in the case where the user carries out training in order to improve their physical fitness and cognitive function and the prediction results for health assets improves may be provided.

As another example, the prediction results for health assets may be used in a determination for loan credit. For example, the longer the period of time until the health asset rank decreases, the easier it is to have financing with good conditions, and otherwise the harder financing becomes.

As another example, the prediction results for health assets may be used for marketing. For example, it is possible that the longer the period of time until the health asset rank decreases, the more that a more expensive product will be recommended, and in other cases a cheaper product will be recommended.

### <<5. Hardware configuration example>>

Finally, with reference to FIG. 10, description is given regarding a hardware configuration of an information processing apparatus according to the present embodiment. FIG. 10 is a block view that illustrates an example of a hardware configuration of an information processing apparatus according to the present embodiment. Note that an information processing apparatus 900 illustrated in FIG. 10 can be realized by the server 1 illustrated in FIG. 3, for example. Information processing by the server 1 according to the present embodiment is realized by collaboration between software and hardware that is described below.

As illustrated in FIG. 10, the information processing apparatus 900 is provided with a CPU (Central Processing Unit) 901, a ROM (Read-Only Memory) 902, a RAM (Random Access Memory) 903, and a host bus 904a. In addition, the information processing apparatus 900 is provided with a bridge 904, an external bus 904b, an interface 905, an input apparatus 906, an output apparatus 907, a storage apparatus 908, a drive 909, a connection port 911, and a communication apparatus 913. In place of or in addition to the CPU 901, the information processing apparatus 900 may have an electric circuit or a processing circuit such as a DSP or an ASIC.

The CPU 901 functions as an arithmetic processing apparatus and a control apparatus, and controls overall operation within the information processing apparatus 900 in accordance with various computer programs. In addition, the CPU 901 may be a microprocessor. The ROM 902 stores a program, arithmetic parameters, and the like that the CPU 901 uses. The RAM 903 temporarily stores a program used in execution by the CPU 901, a parameter that changes as appropriate in this execution, or the like. The CPU 901 can form the control unit 130 illustrated in FIG. 3, for example.

The CPU 901, the ROM 902, and the RAM 903 are mutually connected by the host bus 904a which includes a CPU bus and the like. The host bus 904a is connected to the external bus 904b, which is a PCI (Peripheral Component Interconnect/Interface) bus or the like, via the bridge 904. Note that it is not necessarily the case that the host bus 904a, the bridge 904, and the external bus 904b are separately configured, and the functionality of these may be implemented by one bus.

The input apparatus 906 is realized by an apparatus to which information is inputted by the user, such as a mouse, a keyboard, a touch panel, a button, a microphone, a switch, and a lever, for example. In addition, for example, the input apparatus 906 may be a remote-control apparatus that uses infrared rays or other radio waves, or may be an externally connecting device such as a PDA or a mobile phone corresponding to operation of the information processing apparatus 900. Further, the input apparatus 906 may include, for example, an input control circuit that generates an input signal on the basis of information inputted by the user using input means described above, and outputs the input signal to the CPU 901. By operating the input apparatus 906, a user of the information processing apparatus 900 can input various pieces of data to the information processing apparatus 900 and instruct a processing operation.

The output apparatus 907 is formed by an apparatus that can visually or auditorily notify obtained information to the user. Such an apparatus includes a display apparatus such as a CRT display apparatus, a liquid-crystal display apparatus, a plasma display apparatus, an EL display apparatus, a laser projector, an LED projector, and a lamp, an audio output apparatus such as a speaker and a headphone, and a printer apparatus. The output apparatus 907, for example, outputs a result obtained in accordance with various kinds of processing performed by the information processing apparatus 900. Specifically, the display apparatus visually displays a result obtained by various kinds of processing that the information processing apparatus 900 performs, in various formats such as text, an image, a table, or a graph. In contrast, the audio output apparatus converts an audio signal, which includes reproduced audio data or acoustic data, into an analog signal, and auditorily outputs the analog signal.

The storage apparatus 908 is an apparatus which is for data storage and which is formed as an example of a storage unit of the information processing apparatus 900. The storage apparatus 908 is implemented by, for example, a magnetic storage device such as an HDD, a semiconductor storage device, an optical storage device, or a magneto-optical storage device. The storage apparatus 908 may include, for example, a storage medium, a recording apparatus that records data to the storage medium, a readout apparatus that reads out data from the storage medium, and a deletion apparatus that deletes data recorded to the storage medium. The storage apparatus 908 stores, for example, a program that the CPU 901 executes, various pieces of data, as well as various pieces of data obtained from an external unit. The storage apparatus 908, for example, can form the storage unit 120 illustrated in FIG. 3.

The drive 909 is a reader/writer for a storage medium, and is built-in to or externally attached to the information processing apparatus 900. The drive 909 reads out information recorded to a mounted removable storage medium such as a magnetic disk, an optical disk, a magneto-optical disk, or a semiconductor memory, and outputs the information to the RAM 903. In addition, the drive 909 can write information to the removable storage medium.

The connection port 911 is an interface that is connected to an external device, and is an external device connection port that enables data transmission by, for example, USB (Universal Serial Bus).

The communication apparatus 913 is a communication interface formed by, for example, a communication device for connecting to the network 920. The communication apparatus 913 is, for example, a communication card for a wired or wireless LAN (Local Area Network), LTE (Long Term Evolution), Bluetooth (registered trademark), or WUSB (Wireless USB). In addition, the communication apparatus 913 may be a router for optical communication, a router for ADSL (Asymmetric Digital Subscriber Line), a modem for various types of communication, or the like. The communication apparatus 913 can transmit and receive to and from the Internet or another communication device, for example, a signal conforming to a predetermined protocol such as TCP/IP, for example. The communication apparatus 913 can form the communication unit 110 illustrated in FIG. 3, for example.

Note that the network 920 is a wired or wireless communication path for information transmitted from an apparatus connected to the network 920. For example, the network 920 may include a public network such as the Internet, a telephone line network, or a satellite communication network, various types of LAN (Local Area Network) including Ethernet (registered trademark), a WAN (Wide Area Network), or the like. The network 920 may include a dedicated network such as an IP-VPN (Internet Protocol-Virtual Private Network).

Description was given above for an example of a configuration of hardware that can realize the functionality of the information processing apparatus 900 according to the present embodiment. Each component described above may be realized using a general-purpose member, or may be realized by hardware specialized for the functionality of each component. Accordingly, it is possible to change, as appropriate, the hardware configuration that is used, according to the technical level when the present embodiment is implemented.

Note that it is possible to create a computer program for realizing each function of the information processing apparatus 900 according to the present embodiment as described above, and install the computer program in a PC or the like. In addition, it is also possible to provide a recording medium which can be read by a computer and on which such a computer program is stored. The recording medium is, for example, a magnetic disk, an optical disk, a magneto-optical disk, a flash memory, or the like. In addition, the computer program described above may be distributed via a network, for example, without using a recording medium.

### <<6. Supplement>>

Description in detail is given above regarding a preferred embodiment of the present disclosure with reference to the attached drawings, but the technical scope of the present disclosure is not limited to this example. It is apparent that a person having ordinary knowledge in the technical field of the present disclosure may conceive of various changes or modifications within the scope of the technical idea described in the claims, and it is naturally understood that they also belong to the technical scope of the present disclosure.

In addition, processing described using flow charts and sequence diagrams in the present specification does not necessarily need to be executed in the illustrated order. Any number of processing steps may be executed in parallel. In addition, additional processing steps may be employed, and some processing steps may be omitted.

In addition, effects set forth in the present specification are purely descriptive or exemplary, and are not limiting. In other words, in addition to or in place of effects described above, the technology according to the present disclosure can achieve other effects that are obvious to a person skilled in the art from the language of the present specification.

Note that a configuration as follows also belongs to the technical scope of the present disclosure.
(1)
   An information processing apparatus including:
   a first prediction unit that performs a future prediction for health assets including physical function and/or cognitive function of a target person;
   a second prediction unit that performs a future prediction for economic assets of the target person; and
   a generation unit that, on the basis of prediction results for the health assets and prediction results for the economic assets of the target person, generates information pertaining to options that are capable of being selected by the target person.
(2)
   The information processing apparatus according to (1), in which the information pertaining to the options includes information indicating prediction results for the economic assets, for each of the options.
(3)
   The information processing apparatus according to (1) or (2), in which the information pertaining to the options includes information that recommends an action that the target person should perform, for each of the options.
(4)
   The information processing apparatus according to (3), in which the recommended action differs according to the prediction results for the health assets of the target person.
(5)
   The information processing apparatus according to (3) or (4), in which the recommended action differs according to prediction results for the health assets for another person who influences the economic assets of the target person.
(6)
   The information processing apparatus according to any one of (3) through (5), in which the recommended action is an action for delaying a timing at which a balance of the economic assets of the target person falls below a predetermined threshold.
(7)
   The information processing apparatus according to any one of (3) through (6), in which the recommended action is an action for compensating for economic risk.
(8)
   The information processing apparatus according to any one of (3) through (7), in which the recommended action is investment.
(9)
   The information processing apparatus according to (8), in which the recommended action includes purchasing a financial product with an operating period according to the prediction results for the health assets.
(10)
   The information processing apparatus according to any one of (1) through (9), in which the options include continuing a current job and switching to another job.
(11)
   The information processing apparatus according to any one of (1) through (10), in which the generation unit generates information that recommends an action for suppressing a decrease in the health assets of the target person.
(12)
   The information processing apparatus according to any one of (1) through (11), in which
   the physical function includes muscle strength, endurance, agility, lower limb coordination, and reaction speed, and
   the cognitive function includes memory, attention, judgment, and comprehension.
(13)
   The information processing apparatus according to any one of (1) through (12), in which the first prediction unit predicts change of a rank to which the health assets of the target person belong to, out of plural ranks that are defined in advance for the health assets.
(14)
   The information processing apparatus according to (13), in which the plural ranks for the health assets include a rank at which long-term care is necessary.
(15)
   The information processing apparatus according to any one of (1) through (14), in which the first prediction unit performs the future prediction for the health assets of the target person on the basis of past time-series change for the health assets.
(16)
   The information processing apparatus according to any one of (1) through (15), in which the first prediction unit performs the future prediction for the health assets of the target person on the basis of a result of a health checkup for the target person.
(17)
   An information processing method including:
   performing a future prediction for health assets including physical function and/or cognitive function of a target person;
   performing a future prediction for economic assets of the target person; and
   generating, by a processor and on the basis of prediction results for the health assets and prediction results for the economic assets of the target person, information pertaining to options that are capable of being selected by the target person.
(18)
   A recording medium on which a program is recorded, the program for causing a computer to function as:
   a first prediction unit that performs a future prediction for health assets including physical function and/or cognitive function of a target person;
   a second prediction unit that performs a future prediction for economic assets of the target person; and
   a generation unit that, on the basis of prediction results for the health assets and prediction results for the economic assets of the target person, generates information pertaining to options that are capable of being selected by the target person.

### [Reference Signs List]

- 1:: Server
- 2:: User terminal
- 3:: Measurement facility
- 4:: Measurement apparatus
- 4A:: Sensor information processing terminal
- 4B:: Sensor device
- 9:: Network
- 100:: Apparatus
- 110:: Communication unit
- 120:: Storage unit
- 130:: Control unit
- 131:: First prediction unit
- 132:: Second prediction unit
- 133:: Generation unit
- 134:: Output control unit

## Claims

1. An information processing apparatus comprising:
a first prediction unit that performs a future prediction for health assets including physical function and/or cognitive function of a target person;
a second prediction unit that performs a future prediction for economic assets of the target person; and
a generation unit that, on a basis of prediction results for the health assets and prediction results for the economic assets of the target person, generates information pertaining to options that are capable of being selected by the target person.

2. The information processing apparatus according to claim 1, wherein the information pertaining to the options includes information indicating prediction results for the economic assets, for each of the options.

3. The information processing apparatus according to claim 1, wherein the information pertaining to the options includes information that recommends an action that the target person should perform, for each of the options.

4. The information processing apparatus according to claim 3, wherein the recommended action differs according to the prediction results for the health assets of the target person.

5. The information processing apparatus according to claim 3, wherein the recommended action differs according to prediction results for the health assets for another person who influences the economic assets of the target person.

6. The information processing apparatus according to claim 3, wherein the recommended action is an action for delaying a timing at which a balance of the economic assets of the target person falls below a predetermined threshold.

7. The information processing apparatus according to claim 3, wherein the recommended action is an action for compensating for economic risk.

8. The information processing apparatus according to claim 3, wherein the recommended action is investment.

9. The information processing apparatus according to claim 8, wherein the recommended action includes purchasing a financial product with an operating period according to the prediction results for the health assets.

10. The information processing apparatus according to claim 1, wherein the options include continuing a current job and switching to another job.

11. The information processing apparatus according to claim 1, wherein the generation unit generates information that recommends an action for suppressing a decrease in the health assets of the target person.

12. The information processing apparatus according to claim 1, wherein
the physical function includes muscle strength, endurance, agility, lower limb coordination, and reaction speed, and
the cognitive function includes memory, attention, judgment, and comprehension.

13. The information processing apparatus according to claim 1, wherein the first prediction unit predicts change of a rank to which the health assets of the target person belong to, out of plural ranks that are defined in advance for the health assets.

14. The information processing apparatus according to claim 13, wherein the plural ranks for the health assets include a rank at which long-term care is necessary.

15. The information processing apparatus according to claim 1, wherein the first prediction unit performs the future prediction for the health assets of the target person on a basis of past time-series change for the health assets.

16. The information processing apparatus according to claim 1, wherein the first prediction unit performs the future prediction for the health assets of the target person on a basis of a result of a health checkup for the target person.

17. An information processing method comprising:
performing a future prediction for health assets including physical function and/or cognitive function of a target person;
performing a future prediction for economic assets of the target person; and
generating, by a processor and on a basis of prediction results for the health assets and prediction results for the economic assets of the target person, information pertaining to options that are capable of being selected by the target person.

18. A recording medium on which a program is recorded, the program for causing a computer to function as:
a first prediction unit that performs a future prediction for health assets including physical function and/or cognitive function of a target person;
a second prediction unit that performs a future prediction for economic assets of the target person; and
a generation unit that, on a basis of prediction results for the health assets and prediction results for the economic assets of the target person, generates information pertaining to options that are capable of being selected by the target person.
